# EUROPÄISCHE PATENTSCHRIFT

(11) **EP 2 275 637 B1**
(45) Veröffentlichungstag und Bekanntmachung des Hinweises auf die Patenterteilung: **02.04.2014**
(21) Anmeldenummer: 10007127.3
(22) Anmeldetag: 09.07.2010
(51) Int. Cl.: E06B 1/02, E06B 3/06, B29C 70/76, E06B 3/88, E06B 3/964

(54) **Türblatt**
Door leaf
Vantail

(30) Priorität: 09.07.2009 DE 102009032312
(43) Veröffentlichungstag der Anmeldung: 19.01.2011
(73) Patentinhaber: Noblesse Türfüllungen GmbH & Co. KG, 76768 Berg/Pfalz (DE)
(72) Erfinder: Berizzi, Hans Heinrich, 76768 Berg (DE)
(74) Vertreter: Müller-Gerbes Wagner Albiger Patentanwälte

(56) Entgegenhaltungen:
- AT-U2- 9 351
- GB-A- 2 278 140
- GB-A- 2 343 476

## Beschreibung

Die Erfindung betrifft ein Türblatt.

Aus der DE 20 2009 003 483 U1 ist ein Türblatt bekannt, das eine Rahmenkonstruktion umfasst. Die Rahmenkonstruktion wird durch eine Armierung aus Metallstegen verstärkt. Metallstege können als Wärmebrücken dienen.

In der AT 009 351 U2 ist ein Türblatt beschrieben, das ein Kernelement aus Polystyrolwerkstoffen sowie ein Falzelement umfasst. Das Falzelement wiederum umfasst eine Trägerschicht und eine Falzschicht. Die Falzschicht wird nach dem Formatieren des Türblatts auf die Trägerschicht als eine 2-4 mm dicke Kante aufgegossen.

Hiervon ausgehend ist es Aufgabe der vorliegenden Erfindung, ein verbessertes Türblatt bereit zu stellen, das sich vorzugsweise durch eine gute Wärmdämmung und/oder eine gute Einbruchsicherheit auszeichnet. Ein einfacher Aufbau ist wünschenswert.

Die der Erfindung zugrunde liegende Aufgabe wird gelöst durch ein Türblatt mit einem Paneelelement nach dem vorliegenden Anspruch 1, wobei das Paneelement umfasst: ein Kernelement, ein Falzelement, das an Kanten des Kernelements zumindest abschnittsweise angebracht ist. Das Falzelement ist vorzugsweise im Wesentlichen vollständig um das Kernelement herum angebracht, wobei eine Unterseite des Kernelements auch ausgespart bleiben kann. Das Falzelement weist eine Trägerschicht auf, wobei die Trägerschicht eine höhere Dichte aufweist, als das Kernelement.

Gemeinsam mit einem nicht näher beschriebenen Türrahmen kann das Türblatt zu einer Tür weitergebildet werden. Ein derartiges Türblatt eignet sich insbesondere für Haus- oder Wohnungsabschlusstüren. Durch die Trägerschicht, welche eine größere Dichte als das Kernelement aufweist, kann dem Türblatt eine größere Festigkeit verliehen werden. Dies ist insbesondere dann von Vorteil, wenn das Kernelement weitgehend oder vollständig durch einen Schaum, insbesondere einen Kunststoffschaum gebildet ist. Ein derartiger Kunststoffschaum wird dabei insbesondere für eine verbesserte Wärmeisolation verwendet. In Kombination kann auch vorgesehen sein, dass zusätzlich auf das Falzelement eine weitere Schutzschicht, insbesondere ein Lack oder eine Gelcoat-Schicht aufgebracht wird. Diese weitere Schicht kann sich auch über weite Teile des Türblattes, nämlich insbesondere dem Flächenelement oder dem Kernelement erstrecken.

Durch die Ausbildung des Falzelements mit einer Trägerschicht, kann das Falzelement selbst einen großen Beitrag zur Stabilität des Paneelelements und des Türblattes beitragen. Die Trägerschicht kann dabei auch aus Kunststoff hergestellt sein. Auf metallische Armierungen kann verzichtet werden.

Die Schäume können insbesondere durch stark aufgeschäumte Kunststoffe mit einem hohen Anteil an Lufteinschluss gebildet sein. Derartige Schaumstoffe weisen jedoch eine lediglich geringe Stabilität auf. Die Trägerschicht, die eine größere Dichte aufweist und vorzugsweise aus einem härteren Schaum gebildet sein kann, kann diese mangelnde Stabilität des Kernelements ausgleichen und damit dem Türblatt eine erforderliche Stabilität verschaffen. Besonders durch eine Kombination mit einem gut wärmeisolierenden Kernelement und der Trägerschicht kann sich ein Türblatt ergeben, das sich durch eine gute Wärmedämmung sowie eine gute Stabilität, insbesondere eine Widerstandsfähigkeit gegenüber Einbrüchen, auszeichnen kann.

Erfindungsgemäß weist das Falzelement eine Falzschicht auf, die auf die Trägerschicht aufgebracht ist. Die Falzschicht ist dabei vorzugsweise mehr als 1 mm dick, insbesondere mehr als 2 mm dick, insbesondere in etwa 5 mm dick. Die Querschnittsdicke kann jedoch an einzelnen Stellen durch Abfräsungen oder Ausfräsungen reduziert sein. Die Falzschicht ist dabei vorzugsweise um die Trägerschicht herum angeordnet. Die Falzschicht ist vorzugsweise im Wesentlichen vollständig um das Kernelement und/oder die Trägerschicht herum angeordnet, wobei eine Türunterseite dabei von der Falzschicht ausgenommen bleiben kann.

Die Falzschicht weist eine größere Härte auf als die Trägerschicht. Die Härte ist dabei vorzugsweise größer als 60 Shore vorzugsweise größer als 80 Shore. Die Falzschicht ist dabei insbesondere zum Anbringen von Beschlägen geeignet, die sich an der Falzschicht abstützen können. Durch die erhöhte Härte kann eine Positionstreue der daran befestigten Beschläge sichergestellt sein, so dass auch die Befestigung von Türschlössern oder anderen stark beanspruchten Teilen dort gut vorgenommen werden kann. Grundsätzlich ist unter einem Beschlag im Rahmen der Erfindung ein Element zu verstehen, das auf bestimmten meist großflächigen Materialien Angriffspunkte für Kräfte bietet. Die großflächigen Materialien können dabei relativ weich sein. Der Beschlag ist meist aus einem härteren Material gebildet als das großflächige Material, an dem sich der Belag abstützt. Dabei kann der Beschlag die Falzschicht lokal durchbrechen. Insofern kann auch die Trägerschicht zum mechanischen Abstützen des Beschlages herangezogen werden. Vorzugsweise kann sich ein Beschlag sowohl an der Trägerschicht als auch an der Falzschicht abstützen, wobei die erhöhte Stabilität basierend auf der Trägerschicht sowie die Positionstreue durch die Anbindung an der Falzschicht vorteilhaft ausgenutzt werden können. Beschlagausnehmungen in der Falzschicht können daher deckungsgleich mit Beschlagausnehmungen in der Trägerschicht sein.

Vorzugsweise weist die Falzschicht eine geringere Oberflächenrauhigkeit auf als die Trägerschicht. Dabei wird die Oberflächenrauhigkeit zum Zeitpunkt bewertet, bei dem die Falzschicht noch nicht an der Trägerschicht angebracht ist. Ferner wird die Oberflächenrauhigkeit vorzugsweise dann bewertet, wenn keine der Schichten mit Schutzschichten, wie Lacken oder Gelcoatschichten versehen sind. Durch die Verwendung der Falzschicht, die vorzugsweise die Trägerschicht vollständig überdeckt, kann eine optisch ansprechende Oberfläche aus Kernelement bzw. Flächenelementen, die das Kernelement abdecken, und aus der Falzschicht hergestellt sein. Die Verwendung von Trägerschichten aus Materialien, die eine relativ rauhe Oberfläche erzeugen, kann dabei weiterhin möglich sein, ohne dass dabei optische Nachteile entstehen müssen.

Vorzugsweise ist die Falzschicht an die Trägerschicht angegossen. Durch das Angießen können sich unterschiedliche Vorteile ergeben. Zunächst kann ein Werkstoff verwendet werden, der gut verträglich mit dem Werkstoff der Trägerschicht ist. Insbesondere kommen hier Kunststoffe, insbesondere Polyurethan in Betracht. Hierdurch lässt sich eine besonders stabile Verbindung zwischen der Falzschicht und der Trägerschicht erzielen. Ferner können Falzschichten in unterschiedlichster Form aufgebracht werden, ohne dass dazu die Anfertigung von Werkzeugen notwendig ist. Durch das Angießen kann ferner eine homogene Oberfläche gebildet werden. Ein Nacharbeiten der Falzschicht kann überflüssig werden.

Zur individuellen Anpassung der Falzschicht an spezielle Bedürfnisse kann die Falzschicht zunächst mit Übermaß angebracht oder vorzugsweise angegossen werden. Anschließend kann die Falzschicht auf das gewünschte Maß abgefräst werden. Bei dem Abfräsen können auch Beschlagausnehmungen in die Falzschicht eingebracht werden. Bei dem Anbringen von Beschlagausnehmungen in die Falzschicht können auch zugleich Beschlagausnehmungen in die Trägerschicht angebracht werden. Das Vorsehen spezieller Werkzeuge zur Herstellung von Beschlagausnehmungen oder Ähnlichem kann entfallen, wenn ein Fräsen vorgesehen ist.

Vorzugsweise ist die Trägerschicht aus einem Hartschaum gebildet, insbesondere einem Polyurethanhartschaum. Insbesondere ist es von Vorteil, wenn die Trägerschicht aus Purenit® hergestellt ist. Unter Purenit® wird ein Funktionswerkstoff verstanden, der auf Polyurethanbasis hergestellt ist. Vorzugsweise weist die Trägerschicht eine Rohdichte von mehr als 350 kg/m³, insbesondere mehr als 400 kg/m³ auf. Die Trägerschicht ist vorzugsweise chemikalienbeständig, insbesondere gegen Mineralöle, Aceton, Methylenchlorid und anderen Lösungsmitteln. Ferner ist eine Kaschier- und Beschichtbarkeit der Trägerschicht erwünscht, insbesondere damit eine Falzschicht aufgebracht werden kann.

Vorzugsweise ist das Kernelement aus einem Kunststoffschaum gebildet, insbesondere aus einem Polyurethanschaum. Daher ist es besonders vorteilhaft, wenn die Trägerschicht aus einem Material hergestellt ist, welches gut verträglich mit dem Polyurethanhartschaum ist, insbesondere selbst aus Polyurethanbasis hergestellt ist. Ein Verkleben mit der Trägerschicht kann sich durch eine sehr gute Festigkeit auszeichnen.

Vorzugsweise ist das Kernelement durch ein innenseitiges Flächenelement und ein außenseitiges Flächenelement zumindest abschnittsweise, vorzugsweise im Wesentlichen vollständig, abgedeckt. Das außenseitige Flächenelement weist eine größere Härte auf als das innenseitige Flächenelement. Die Bezeichnungen "innenseitig" und "außenseitig" beziehen sich auf die vorgesehene Nutzung des Türblattes. Das außenseitige Flächenelement ist dabei für die Verwendung an einer Seite des Kernelements vorgesehen, welche zur Außenseite eines Gebäudes oder einer Wohnung weist, während sich das innenseitige Flächenelement für die Verwendung an einer Seite des Kernelements vorgesehen ist, welche zur Innenseite eines Gebäudes oder einer Wohnung weist. Das außenseitige Flächenelement ist daher insbesondere dasjenige, welches mechanischen Gewalteinwirkungen im Falle eines Einbruchsversuchs unmittelbar ausgesetzt wird. Durch die größere Härte kann das Türblatt eine höhere Schlagfestigkeit aufweisen. Ein Flächenelement deckt dabei vorzugsweise das Kernelement im Wesentlichen vollständig ab. Lokale Ausnehmungen bleiben dabei aber möglich, insbesondere zu dekorativen Zwecken, bei denen eine Abdeckung durch andere Mittel vorgenommen sein kann. Für den Fall, dass das betreffende Flächenelement mehrschichtig ausgebildet ist bezieht sich die Härte vorzugsweise stets auf eine dem Kernelement abgewandte Fläche des Flächenelements. Die Oberflächenhärte des außenseitigen Flächenelements beträgt vorzugsweise zumindest 150 Shore, vorzugsweise 200 Shore.

Alternativ oder in Kombination dazu kann das Kernelement durch ein innenseitiges Flächenelement und ein außenseitiges Flächenelement abgedeckt sein, wobei das außenseitige Flächenelement einen größeren Elastizitätsmodul aufweist als das innenseitige Flächenelement. Unter dem Elastizitätsmodul ist ein Materialkennwert zu verstehen, der den Zusammenhang zwischen Spannung und Dehnung bei der Verformung eines festen Körpers beschreibt. Ein Werkstück aus einem Material mit einem größeren Elastizitätsmodul setzt seiner Verformung mehr Widerstand entgegen als ein ansonsten identisches Werkstück, das aus einem Material mit geringerem Elastizitätsmodul hergestellt ist. Ein Bauteil aus einem Material mit hohem Elastizitätsmodul ist daher also in der Regel steifer als ein Bauteil aus einem Material mit niedrigerem Elastizitätsmodul. Hierdurch kann sich ergeben, dass das außenseitige Flächenelement eine hohe Widerstandsfähigkeit gegen Verbiegen aufweist. Dies kann die Einbruchssicherheit der Türblattes erheblich erhöhen, da ein Ablösen der Verbindung des außenseitigen Flächenelements vom Kernelement, welche insbesondere als Verklebung dargestellt sein kann, durch die geringe Biegbarkeit erschwert sein kann. Bevorzugt weist das außenseitige Flächenelement zumindest eine Biegesteifigkeit von zumindest 300 N/mm², vorzugsweise zumindest 400 N/mm², vorzugsweise zumindest 470 N/mm² auf.

Das außenseitige Flächenelement kann durch eine Epoxidharzschicht gebildet sein oder durch eine Schicht, die weitgehend aus Epoxidharz besteht. Diese Schicht kann Fasern, z.B. Glasfasern, zur Verstärkung aufweisen. Diese Fasern können durch ein Prepreg gebildet sein. Durch diese Materialwahl kann sowohl eine hohe Härte als auch ein hoher Elastizitätsmodul hergestellt werden. Das innenseitige Flächenelement kann ebenfalls einen derartigen Aufbau aufweisen. Alternativ kann für die Bildung des innenseitigen Flächenelements ein faserverstärkter, insbesondere glasfaserverstärkter, Kunststoff verwendet werden, durch den eine geringere Härte sowie ein geringerer Elastizitätsmodul erzeugt werden kann. Ferner kann die Querschnittsdicke des außenseitigen Flächenelements größer als die des innenseitigen Flächenelements ausgebildet sein, wodurch das außenseitige Flächenelement biegesteifer als das innenseitige Flächenelement ausgebildet werden kann.

Die der Erfindung zugrunde liegende Aufgabe wird ferner gelöst durch ein Verfahren zum Herstellen eines Türblattes nach dem vorliegenden Anspruch 8, wobei das Türblatt mit einem Falzelement versehen ist, wobei an ein Kernelement ein Falzelement angebracht wird, wobei das Falzelement zumindest teilweise aus einem Kunststoff gebildet ist.

Das erfindungsgemäße Verfahren ist dadurch gekennzeichnet, dass zumindest Teile des Falzelements zumindest mittelbar an das Kernelement angegossen werden. Durch das Angießen von zumindest Teilen des Falzelements, mittelbar oder auch unmittelbar, an das Kernelement lassen sich Falzelement unterschiedlichster Formen erzeugen, ohne dass dabei zwangsläufig das Vorsehen spezieller Werkzeuge notwendig ist. Die bezüglich des Türblatts genannten weiteren Ausgestaltungsmöglichkeiten und Vorteile sind, soweit technisch möglich, auch auf das Verfahren anzuwenden.

Erfindungsgemäß wird die Falzschicht mit Übermaß auf die Trägerschicht angegossen. Anschließend wird die Falzschicht auf Maß abgefräst. Hierdurch kann ein Falzelement mit besonders guter Maßhaltigkeit hergestellt werden. Ferner können durch das Abfräsen neben der Herstellung der guten Maßhaltigkeit auch zugleich Beschlagausnehmungen und/oder Nuten, insbesondere zum Einsetzen von Dichtungselementen, hergestellt werden. Vorzugsweise können durch den Fräsvorgang Beschlagausnehmungen oder Nuten sowohl in die Falzschicht als auch in die Trägerschicht eingebracht werden. Insbesondere wenn die Falzschicht aus einem relativ harten Werkstoff hergestellt ist und die Trägerschicht aus einem etwas weicheren Material hergestellt ist, welches jedoch durch eine gewisse Elastizität eine gute Stabilität aufweist, kann sich durch die Kombination dieser beiden Schichten bei der Befestigung eines Beschlages eine sehr gute Festigkeit des Beschlages gegenüber dem Falzelement insgesamt ergeben.

Vorzugsweise werden für die Trägerschicht und die Falzschicht Kunststoffe verwendet, die auf demselben Stoff, insbesondere Polyurethan basieren. Ferner ist es bevorzugt, wenn auch das Kernelement auf demselben Stoff basiert, auf dem die Falzschicht und/oder die Trägerschicht basiert. Stoffschlüssige Verbindungen dieser Elemente bzw. Schichten können stabiler sein.

Durch eine Veränderung in der Gesamtstärke und mit einem Einbringen von schallisolierenden Materialien, lassen sich die Türblätter mit derartigem Paneelelement auch als Wohnungsabschlusstüren gut einsetzen. Diese können je nach Ausführung der vorgesehenen Falzgeometrie in einem Neubau sowie hinsichtlich einer Sanierung eines Altbestandes gut eingesetzt werden. Beispielsweise können hierbei bereits oftmals eingegossene Stahlzargen im Bestand erhalten bleiben, indem nur die vorhandenen Türblätter gegen das vorliegende vorteilhafte Paneelelement ausgetauscht werden. Weitere Variationen mit Sanierungszargen, welche die bestehenden Stahlzargen überdecken können, sind ebenso möglich.

Insofern sieht eine besonders vorteilhafte Ausführungsvariante hinsichtlich des vorliegenden Paneelelements auch vor, dass das Kernelement aus einem Polyurethan-Schaum und das Falzelement zumindest teilweise aus einem Polyurethan-Hartschaum, vorzugsweise aus Purenit® oder aus Baydur® oder speziell Beydur®60 hergestellt sind.

Die genannten Polyurethan-Schäume unterscheiden sich in ihrer Dichte. Das Polyurethan-Falzelement oder Teile davon sind in ihrer Dichte wesentlich schwerer, dadurch auch stabiler und ausreißfester als das wärmedämmende Polyurethan-Kernelement. Oberflächen des Paneeielements und eine Falzaußenkontur können vorteilhafter Weise mit einer Gelcoat-Schicht überzogen werden, um so eine besonders glatte Oberfläche hinsichtlich des Paneelelements zu erhalten.

Durch die Bautiefe des Paneelelements und die eingesetzten Werkstoffe mit hervorragend isolierenden Eigenschaften entsteht idealerweise ein Füllungsflügel en bloc, der mit den entsprechenden Beschlägen an einem Türrahmen angeschlagen werden kann.

Mittels des Falzelements lassen sich unterschiedliche Falzkonturen entsprechend dem Türsystem problemlos angleichen. Ebenso lassen sich Dichtungsnuten eingießen bzw. einfräsen und je nach Falzüberschlag entsprechende Bandsysteme vorteilhaft einsetzen.

An einem derartigen Falzelement können durch die hohe Dichte des Materials und der guten Ausreißfestigkeit Schlösser, Türbänder, Aushebelsicherungen und andere Beschlagteile besonders sicher verschraubt werden.

Speziell der Bereich um das Türschloss herum kann von einem Falzelement, insbesondere einem Polyurethanfalzelement, vorteilhafter Weise großräumig eingefasst werden, damit Beschläge, wie Langschildgarnituren, Türdrücker und Griffe, massiv an dem Paneelelement angeschraubt werden können, ohne hierbei das Paneelelement zu quetschen.

Vorzugsweise besteht im Wesentlichen das gesamte Paneelelement aus Kunststoff, insbesondere Polyurethan, oder Verbundstoffen, insbesondere glasfaserverstärkte Kunststoffe / Prepreg, die zum volumenmäßig größten Teil aus derartigem Kunststoff gebildet sind, nämlich insbesondere das Kernelement, das Falzelement, Flächenelemente insbesondere zum Abdecken des Kernelements. Dabei insbesondere sind alle tragenden Teile des Paneelelements gemeint. Beschlagteile oder Türschlösser / Türklinken gehören nicht zum Paneelelement.

Darüber hinaus können das Einfräsen von Ausschnitten in das vorliegende Paneelelement vorteilhafter Weise auch Isoliergläser oder dergleichen eingesetzt oder eingepresst werden.

Die Erfindung wird anhand der Figur nachfolgend näher erläutert. Hierin zeigt
- Figur 1: schematisch einen Querschnitt durch ein nicht erfindungsgemäßes Türblatt, das innerhalb eines Türrahmens angebracht ist;
- Figur 2: schematisch einen Querschnitt durch ein nicht erfindungsgemäßes Türblatt, das innerhalb eines Türrahmens angebracht ist und mit einer Aluminiumaußenhaut versehen ist;
- Figur 3: schematisch einen Querschnitt durch ein erfindungsgemäßes Türblatt, das an einem Türrahmen angebracht ist;
- Figur 4: das Türblatt nach Figur 3 im Querschnitt in einer anderen Schnittebene.

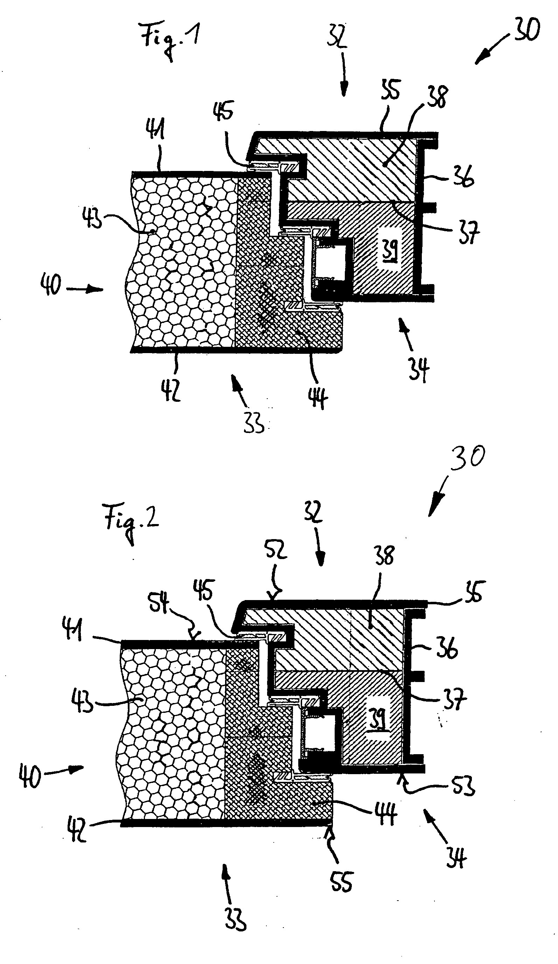

Bei der in der Figur 1 ausschnittsweise gezeigten Tür 30 handelt es sich um eine Wohnungseingangstür 30 mit einem Türrahmen 32 und einem Türblatt 33, welches an dem Türrahmen 32 angeschlagen ist.

Der Türrahmen 32 ist aus L-förmig gestalteten Profilelementen 34 gefertigt, wobei diese L-förmigen Profilelemente 34 jeweils ein Schalenteil 35 und ein Deckelteil 36 umfassen.

Die L-förmigen Profilelemente 34 besitzen ein mehrschichtiges Kernteil 37, wobei eine erste Schicht 38 aus einem Polyurethan-Schaum und eine zweite Schicht 39 aus Baydur®60 oder Purenit® hergestellt sind.

Durch dieses mehrschichtige Kernteil 37 erfahren die Profilelemente 34 der Tür 30 besonders vorteilhafte Eigenschaften. Die erste Schicht 38 aus Polyurethan-Schaum hat hierbei besonders gute wärmeisolierende Eigenschaften, während die zweite Schicht 39 aus Purenit® oder Baydur®60 die Profilelemente 34 weiter versteifen kann. Zudem können im Bereich des Purenit® oder des Baydur®60 Befestigungskomponenten für Beschlagteile besonders ausreißfest an dem Türrahmen 32 befestigt werden.

Das Türblatt 33 wird von einem Paneelelement 40 gebildet, welches ein erstes Flächenelement 41, ein zweites Flächenelement 42, einen Polyurethan-Schaum-Kern 43 und eine Polyurethan-Hartschaum-Falz mit einer Trägerschicht 44 aufweist. Die die Trägerschicht 44 der Polyurethan-Hartschaum-Falz ist an den Polyurethan-Schaum-Kern 43 angebracht und bildet einen umlaufenden harten Abschluss des Paneelelements 40, wobei in die Polyurethan-Hartschaum-Falz 44 vorteilhafter Weise beliebige Konturen eingefräst werden können.

An dem Türrahmen 32 bzw. an dem Türblatt 33 sind noch diverse Dichtungselemente 45 befestigt, sodass die Tür 30 insgesamt dicht verschlossen werden kann.

Bei der in der Figur 2 lediglich teilweise gezeigten Tür 30 handelt es sich um eine Hausabschlusstür, welche nahezu einen identischen Aufbau aufweist, wie die Wohnungseingangstür 30 aus der Figur 1. Insofern werden für gleiche Bauteile auch identische Bezugszeichen verwendet.

Die in der Figur 2 gezeigte Hausabschlusstür 30 zeichnet sich jedoch zusätzlich einerseits durch eine Aluminium-Beplankung aus einer äußeren Aluminiumdeckschale 52 und einer inneren Aluminiumdeckschale 53 aus, durch welche der Türrahmen 32 zusätzlich verstärkt ist. Die Deckschalen sind auf die Flächenelemente 41, 42 aufgebracht oder ersetzen diese.

Auch das Paneelelement 40 weist eine derartige Aluminium-Beplankung aus einem äußeren Aluminiumdeckblech 54 und einem inneren Aluminiumdeckblech 55 auf, wodurch das Türblatt 33 nochmals verstärkt ist.

Die erste Schicht 38 kann als Formteil in den betreffenden Teil-Hohlraum des Schalenteils 35 eingesetzt und dort verklebt werden. Danach kann dann, ebenfalls als fertiges Formteil, die zweite Schicht 39 mit dem Deckelteil 36 eingesetzt werden, wodurch mit diesem Schritt das Schalenteil 35 geschlossen wird.

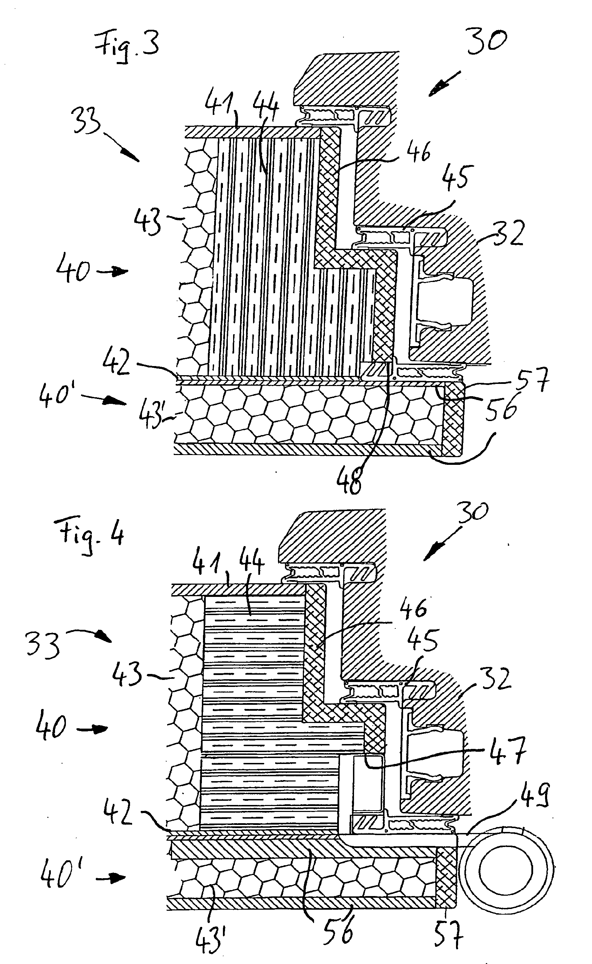

Die Figuren 3 und 4 werden im Folgenden gemeinsam beschrieben. Hierin ist ein Türblatt 33 einer Tür 30 gezeigt. Das Türblatt umfasst ein Paneelelement 40, welches ein Schaumkernelement 43 aus einem Polyurethanschaum aufweist. Im Wesentlichen um das Kernelement 43 herum ist ein Falzelement angeordnet, das eine Trägerschicht 44 und eine Falzschicht 46 umfasst. Die Trägerschicht 44 ist aus einem härteren Kunststoffschaum gebildet, als es das Kernelement 43 ist. Ferner weist die Trägerschicht 44 eine höhere Dichte auf, als das Kernelement 43. Die Trägerschicht 44 ist dabei aus Purenit® hergestellt. Im Wesentlichen um die Trägerschicht 44 herum ist die Falzschicht 46 angeordnet. Diese wurde in einem Verfahrensschritt an die Trägerschicht 44 angegossen. Die Falzschicht 46 wurde dabei mit einem Übermaß von in etwa 5 mm auf die Trägerschicht 44 angegossen. Anschließend wurde die Falzschicht 46 auf das in den Figuren gezeigte Maß abgefräst. Während des Abfräsens wurden zugleich Beschlagausnehmungen 47 und Nuten 48 für die Dichtungselemente 45 in die Falzschicht 46 eingefräst. Zugleich wurden die Beschlagausnehmungen 47 und die Nuten 48 auch über die Falzschicht hinaus in die Trägerschicht 44 gefräst. Ein Beschlag 49, wie er insbesondere in Figur 4 gezeigt ist, kann sich so an der Falzschicht 46 und an der Trägerschicht 44 zugleich abstützen. Die Falzschicht 46 ist dabei aus einem härteren Material hergestellt, als es die Trägerschicht 44 ist. Insofern kann durch die Falzschicht 46 eine positionsgetreue Anbringung des Beschlags 49 am Falzelement 44, 46 ermöglicht werden. Zusätzliche Stabilität kann durch die Trägerschicht 44 bereitgestellt werden, die zwar nicht so hart, aber durch eine gewisse Elastizität eine hohe Stabilität verschaffen kann. Der Beschlag 49 kann dabei unmittelbar in die Trägerschicht 44 eingeschraubt sein. Der Rahmen 32 kann ausgestaltet sein, wie es bezüglich den Figuren 1 und 2 gezeigt ist. Es können aber auch andere Türrahmen verwendet werden. Durch die Kombination aus der harten Falzschicht 46 und der elastischeren Trägerschicht 46 entsteht ein sehr stabiles Falzelement.

Das Paneelelement 40 weist ein außenseitiges Flächenelement 41 und ein innenseitiges Flächenelement 42 auf. Das außenseitige Flächenelement ist in etwa 3 mm stark im Querschnitt, während das innenseitige Flächenelement 42 in etwa 1,5 mm stark im Querschnitt ist. Das außenseitige Flächenelement 41 ist aus Epoxidharz hergestellt und mit einem Prepreg versehen. Das außenseitige Flächenelement 41 ist dadurch relativ hart und biegesteif. Das innenseitige Flächenelement 42 ist aus einem glasfaserverstärkten Kunststoff hergestellt und damit weicher und biegeelastischer als das außenseitige Flächenelement 41. Das außenseitige Flächenelement 41 stellt eine Angriffsfläche für mögliche Einbruchsversuche dar. Durch die höhere Härte bzw. die höhere Biegesteifigkeit ist dieses außenseitige Flächenelement 41 gegenüber dem innenseitigen Flächenelement 42 verbessert geschützt gegen Schläge sowie gegen Abziehen vom Kernelement 43 bzw. von der Trägerschicht 44.

Das Kernelement 43 sowie die Trägerschicht 44 werden vollständig von den Flächenelementen 41, 42 sowie der Falzschicht 46 umschlossen. Beschlagausnehmungen oder Nuten sowie die Unterseite können dabei aber frei bleiben.

Auf einer Innenseite des Türblatts 33 ist ein weiteres Paneelelement 40' angeordnet. Das weitere Paneelelement 40' weist ein Kernelement 43 aus einem relativ stark aufgeschäumten Kunststoffschaum auf. Das Paneelelement 40' dient hauptsächlich zu wärmeisolierenden Zwecken und zu optischen Zwecken. Zur Erhöhung der Einbruchssicherheit wird dieses Paneelelement im Wesentlichen nicht verwendet. Abgedeckt wird das Kernelement 43' durch zwei Flächenelemente 56. Die Flächenelemente 56 sind aus glasfaserverstärktem Kunststoff gebildet. Um das Kernelement 43' herum ist ein Anguss aus Polyurethan 57 vorgesehen. Der Polyurethananguss 57 verschafft dem Paneelelement 40' zusammen mit den Flächenelementen 56 eine homogene glatte Oberfläche. Dies ist insbesondere von Vorteil, da das Kernelement 43 durch einen stark aufgeschäumten Kunststoffschaum gebildet ist, der eine relativ rauhe Oberfläche bildet.

An dieser Stelle sei explizit darauf hingewiesen, dass es sich bei den erläuterten Ausführungsbeispielen lediglich um erste Ausführungsbeispiele der Erfindung handelt, welche sich in keiner Weise einschränkend auf die vorliegende Erfindung auswirken.

### Bezugszeichenliste

- 30: Tür
- 32: Türrahmen
- 33: Türblatt
- 34: Profilelement
- 35: Schalenteil
- 36: Deckelteil
- 37: mehrschichtiges Kernteil
- 38: erste Schicht
- 39: zweite Schicht
- 40: Paneelelement
- 41: erstes Flächenelement
- 42: zweites Flächenelement
- 43: Kernelement
- 44: Trägerschicht
- 45: Dichtungselement
- 46: Falzschicht
- 47: Beschlagausnehmung
- 48: Nut
- 49: Beschlag
- 52: äußere Aluminium-Deckschale
- 53: innere Aluminium-Deckschale
- 54: äußeres Aluminium-Deckblech
- 55: inneres Aluminium-Deckblech
- 56: Flächenelement
- 57: Polyurethananguss

## Patentansprüche

1. Türblatt (33) mit einem Paneelelement (40), wobei das Paneelelement (40) umfasst:
ein Kernelement (43),
ein Falzelement, das an Kanten des Kernelements (43) zumindest abschnittsweise angebracht ist, insbesondere um das Kernelement (43) herum angebracht ist,
wobei das Falzelement eine Trägerschicht (44) aufweist, **dadurch gekennzeichnet, dass** die Trägerschicht (44) eine größere Dichte aufweist als das Kernelement (43), dass das Falzelement eine Falzschicht (46) aufweist, die auf die Trägerschicht (44) aufgebracht ist, und dass die Falzschicht (46) eine größere Härte aufweist als die Trägerschicht (44).

2. Türblatt nach Anspruch 1, **dadurch gekennzeichnet, dass** die Falzschicht (46) eine geringere Oberflächenrauhigkeit aufweist als die Trägerschicht (44).

3. Türblatt nach Anspruch 1 oder 2, **dadurch gekennzeichnet, dass** die Falzschicht (46) auf die Trägerschicht (44) angegossen ist.

4. Türblatt nach einem der vorhergehenden Ansprüche, **dadurch gekennzeichnet, dass** die Trägerschicht (44) aus einem Hartschaum gebildet ist, insbesondere einem Polyurethan-Hartschaum.

5. Türblatt nach einem der vorhergehenden Ansprüche, **dadurch gekennzeichnet, dass** das Kernelement (43) aus einem Kunststoffschaum gebildet ist, insbesondere aus einem Polyurethanschaum.

6. Türblatt nach einem der vorhergehenden Ansprüche, **dadurch gekennzeichnet, dass** das Kernelement (43) durch ein innenseitiges Flächenelement (42) und ein außenseitiges Flächenelement (41) abgedeckt ist, wobei das außenseitige Flächenelement eine größere Härte aufweist als das innenseitige Flächenelement.

7. Türblatt nach einem der vorhergehenden Ansprüche, **dadurch gekennzeichnet, dass** das Kernelement (43) durch ein innenseitiges Flächenelement (42) und ein außenseitiges Flächenelement (41) abgedeckt ist, wobei das außenseitige einen größeren Elastizitätsmodul aufweist als das innenseitige Flächenelement.

8. Verfahren zum Herstellen eines Türblattes, wobei das Türblatt mit einem Falzelement versehen ist,
wobei an ein Kernelement (43) das Falzelement angebracht wird,
wobei das Walzelement (44, 46) zumindest teilweise aus einem Kunststoff gebildet ist,
wobei zumindest Teile des Falzelements (44, 46) zumindest mittelbar an das Kernelement (43) angegossen werden, wobei das Falzelement mehrere Schichten umfasst, wobei eine Trägerschicht (44) zumindest mittelbar an das Kernelement (43) angebracht wird und eine Falzschicht (46) zumindest abschnittsweise an die Trägerschicht (44) angegossen wird, **dadurch gekennzeichnet, dass** die Falzschicht (46) mit Übermaß auf die Trägerschicht (44) angegossen wird und anschließend auf Maß abgefräst wird.

9. Verfahren nach Anspruch 8, **dadurch gekennzeichnet, dass** zugleich Beschlagausnehmungen (47) in die Falzschicht (44) und die Trägerschicht (44) eingebracht werden.

10. Verfahren nach Anspruch 8 oder 9, **dadurch gekennzeichnet, dass** für die Trägerschicht (44) und die Falzschicht (46) Kunststoffe verwendet werden, die auf demselben Stoff basieren, insbesondere auf Polyurethan basieren.

## Claims

1. A door leaf (33) with a panel member (40), the panel member (40) comprising:
a core element (43),
a rabbet member which is attached to edges of the core element (43) at least in some sections, particularly attached around the core element (43),
wherein the rabbet member comprises a substrate layer (44), **characterised in that** the substrate layer (44) has a greater density than the core element (43), that the rabbet element comprises a rabbet layer (46) applied to the substrate layer (44), and that the rabbet layer (46) has a greater hardness than the substrate layer (44)

2. The door leaf according to claim 1, **characterised in that** the rabbet layer (46) has a lower surface roughness than the substrate layer (44).

3. The door leaf according to claim 1 or 2, **characterised in that** the rabbet layer (46) is moulded onto the substrate layer (44).

4. The door leaf according to any one of the preceding claims, **characterised in that** the substrate layer (44) is formed from a rigid foam, in particular from a polyurethane rigid foam.

5. The door leaf according to any one of the preceding claims, **characterised in that** the core element (43) is formed from a plastic foam, in particular from a polyurethane foam.

6. The door leaf according to any one of the preceding claims, **characterised in that** the core element (43) is covered by an inner surface element (42) and an outer surface element (41), the outer surface element having a greater hardness than the inner surface element.

7. The door leaf according to any one of the preceding claims, **characterised in that** the core element (43) is covered by an inner surface element (42) and an outer surface element (41), the outer surface element having a greater modulus of elasticity than the inner surface element.

8. Method for producing a door leaf, the door leaf being provided with a rabbet member,
wherein the rabbet member is attached to a core element (43),
wherein the rabbet member (44, 46) is at least partially formed from a plastic,
wherein at least parts of the rabbet member (44, 46) are at least indirectly moulded onto the core element (43), wherein the rabbet member comprises several layers, wherein a substrate layer (44) is at least indirectly attached to the core element (43) and a rabbet layer (46) is moulded onto the substrate layer (44) at least in some sections, **characterised in that** the rabbet layer (46) is moulded onto the substrate layer (44) with an oversize and is then milled down to size.

9. The method according to claim 8, **characterised in that** fitting recesses (47) are simultaneously introduced into the rabbet layer (44) and the substrate layer (44).

10. The method according to claim 8 or 9, **characterised in that** plastics which are based on the same substance, in particular are based on polyurethane, are used for the substrate layer (44) and the rabbet layer (46).

## Revendications

1. Vantail (33) avec élément de lambris (40), dans lequel l'élément de lambris (40) comprend :
un élément de noyau (43),
un élément de feuillure, apposé au moins en partie aux côtés de l'élément de noyau (43), en particulier autour de l'élément de noyau (43),
où l'élément de feuillure comprend une couche de support (44), **caractérisée en ce que** la couche de support (44) présente une densité plus élevée que l'élément de noyau (43), **en ce que** l'élément de feuillure comprend une couche de feuillure (46), apposée sur la couche de support (44), et **en ce que** la couche de feuillure (46) présente une plus grande dureté que la couche de support (44).

2. Vantail selon la revendication 1, **caractérisé en ce que** la couche de feuillure (46) présente une rugosité superficielle inférieure à celle de la couche de support (44).

3. Vantail selon la revendication 1 ou 2, **caractérisé en ce que** la couche de feuillure (46) est adaptée à la couche de support (44).

4. Vantail selon l'une quelconque des revendications précédentes, **caractérisé en ce que** la couche de support (44) est faite de mousse rigide, en particulier de mousse polyuréthane rigide.

5. Vantail selon l'une quelconque des revendications précédentes, **caractérisé en ce que** l'élément de noyau (43) est fait de mousse synthétique, en particulier de mousse polyuréthane.

6. Vantail selon l'une quelconque des revendications précédentes, **caractérisé en ce que** l'élément de noyau (43) est couvert par un élément de surface interne (42) et un élément de surface externe (41), où l'élément de surface externe présente une rigidité supérieure à celle de l'élément de surface interne.

7. Vantail selon l'une quelconque des revendications précédentes, **caractérisé en ce que** l'élément de noyau (43) est couvert par un élément de surface interne (42) et un élément de surface externe (41), où l'élément de surface externe présente un module d'élasticité supérieur à celle de l'élément de surface interne.

8. Procédé pour la fabrication d'un vantail, où le vantail est pourvu d'un élément de feuillure,
où l'élément de feuillure est apposé à un élément de noyau (43), où l'élément de feuillure (44, 46) est au moins en partie formé d'une matière synthétique,
où au moins une partie de l'élément de feuillure (44, 46) est au moins indirectement assemblé à l'élément de noyau (43), où l'élément de feuillure comprend plusieurs couches, où une couche de support (44) est au moins indirectement assemblée à l'élément de noyau (43), et une couche de feuillure (46) assemblée au moins en sections à la couche de support (44), **caractérisé en ce que** la couche de feuillure (46) est assemblée en surmesure avec la couche de support (44), ensuite fraisée sur mesure.

9. Procédé selon la revendication 8, **caractérisé en ce que** des exclusions de montage (47) soient rapportées en même temps dans la couche de feuillure (44) et dans la couche de support (44).

10. Procédé selon la revendication 8 ou 9, **caractérisé en ce que** des matières synthétiques sont employées pour la couche de support (44) et la couche de feuillure (46), ces matières se basant sur la même matière, en particulier sur le polyuréthane.
